# EUROPEAN PATENT APPLICATION

(11) **EP 1 587 213 A2**
(43) Date of publication of application: **19.10.2005**
(21) Application number: 04255306.5
(22) Date of filing: 02.09.2004
(51) Int. Cl.: H03H 17/02, H04B 1/707

(54) **Matched filter system**

(30) Priority: 15.04.2004 JP 2004120726
(71) Applicant: FUJITSU LIMITED, Kawasaki-shi, Kanagawa 211-8588 (JP)
(72) Inventor: Sakai, Kazuhiko, c/o FJ Mobile Core Techn. Co.,Ltd, Kawasaki-shi Kangawa 211-8588 (JP); Koizumi, Nobukazu, c/o Fujitsu Limited, Kawasaki-shi Kanagawa 211-8588 (JP)
(74) Representative: Hitching, Peter Matthew

(57) **Abstract**

A matched filter able to reduce the size of a circuit is disclosed that includes a shift register (11), a spreading code storage unit (13), a multiplier (15), an accumulator (17), a spreading code generator (19), and an accumulation and storage unit (21). The shift register has a number of sixteen taps (11-0 to 11-15), which equals the square root of the spreading factor 256, and holds and bitshifts received data. The spreading code generator generates spreading codes divided by the number of the taps at a calculation rate roughly sixteen times higher than a data rate of the received data of 3.84 MHz. The spreading code storage unit (13) stores the divided spreading codes generated in the spreading code generator (19) sequentially at the calculation rate. The multiplier (15) multiplies the received data stored in the shift register with the divided spreading codes stored in the spreading code storage unit at the calculation rate. The accumulator (17) sums the products from the multiplier at the calculation rate. The accumulation and storage unit accumulates correlation values related to processing sequences of the same calculation phase, and stores the accumulation result.

## Description

### BACKGROUND OF THE INVENTION

### 1. Field of the Invention

The present invention relates to a digital filter, and particularly, to a matched filer as a constituent element of a mobile communication terminal.

### 2. Description of the Related Art

CDMA (Code Division Multiple Access) is a data transmission technique widely used in mobile communication between cellular phones in wireless communication systems.

In CDMA, synchronization acquisition provides a self-searching function enabling a mobile station to search a closest base station and to register the position of the base station, and a path-searching function enabling the mobile station to search a pilot signal from a base station nearby and to constantly monitor the intensity and an offset of the pilot signal. Generally, a matched filter is used in a searching circuit providing these functions.

In the mobile station, first, a signal received by an antenna is multiplied with a carrier signal and a signal obtained by shifting a phase of the carrier signal by 90 degrees. Next, the signals obtained by this multiplication are filtered, obtaining a signal having the same phase as the phase of the base band (PN code frequency region), and a signal having a phase orthogonal to the phase of the base band. Below, the former signal is referred to as "in-phase signal", and the latter is referred to as "Q-phase signal", where Q stands for "quadrature". The above demodulation processing is referred to as "first-order demodulation" below where necessary. The received signal is referred to "received data" below where appropriate.

Next, the thus obtained in-phase signal and Q-phase signal are multiplied, chip by chip, with the spreading codes of the in-phase signal and the Q-phase signal generated in the mobile station, respectively. The products are summed, giving a correlation value. A number of thus obtained correlation values are raised to the second power and then summed, giving correlation power of the received signal.

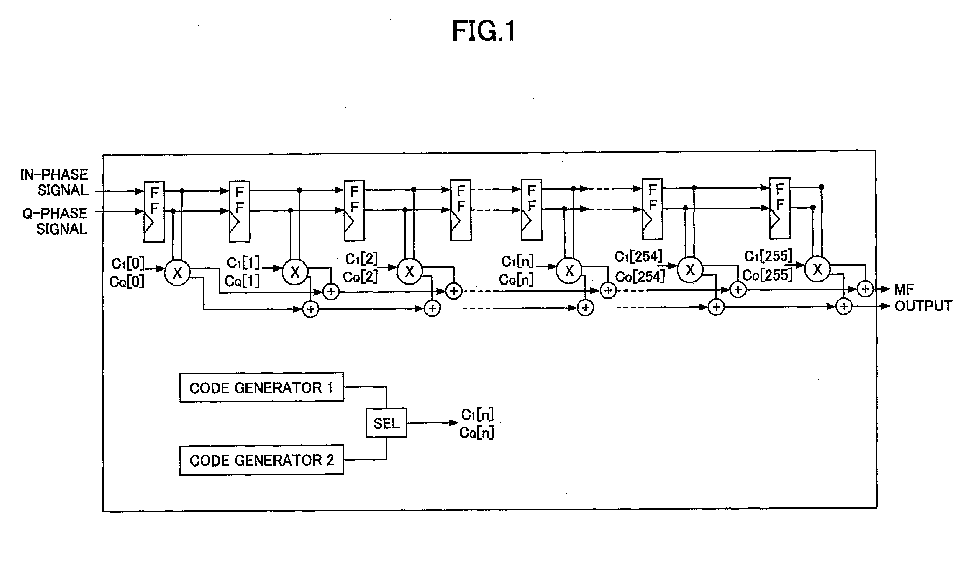

FIG. 1 is a circuit diagram showing a principle of a matched filer in the related art.

In the matched filter shown in FIG. 1, in order to obtain the correlation value, the received in-phase signal and the Q-phase signal are stored in registers formed from flip-flops (FF), and are sequentially shifted at a data rate of the received signal. The received in-phase signal and the Q-phase signal are sequentially multiplied with the spreading codes C_{I}(n) and C_{Q}(n), respectively, generated in code generators 1, 2, and then the products are summed. Based on the results of the calculation, a correlation position resulting in highest correlation power is regarded to be a phase position having the same spreading code, and is determined to be a position for synchronization acquisition.

Specifically, in the matched filer in FIG. 1, the received data are stored in a register having a tap number equaling a correlation length (256 chips), that is, the spreading factor. The received data are multiplied, chip by chip and in parallel, with the spreading code having a length equaling the correlation length. The products are summed, giving the correlation value. When the received data corresponding to the next chip are input to the register, the received data being held in the register are shifted by one chip, and then the next sum-of-product calculation is carried out. In this way, the correlation value at a phase position shifted by one chip is obtained.

Japanese Laid-Open Patent Application No. 2003-158475 discloses an invention related to this technique.

In the matched filter used in synchronization acquisition of the related art, the received in-phase signal and the Q-phase signal are multiplied with their respective spreading codes, separately, and then the products are summed. For example, assume that the spreading factor is 256, and one bit is used for correlation acquisition, that is, the register is used for correlation acquisition. In this case, in one chip before the next received signal is input to the register, that is, in a period of 1/256 of one bit, for both the in-phase signal and the Q-phase signal, 256 chips of the received signal stored in the register should be multiplied in parallel with 256 chips of the spreading codes, respectively, for 256 times, and then all of the 256 products should be summed.

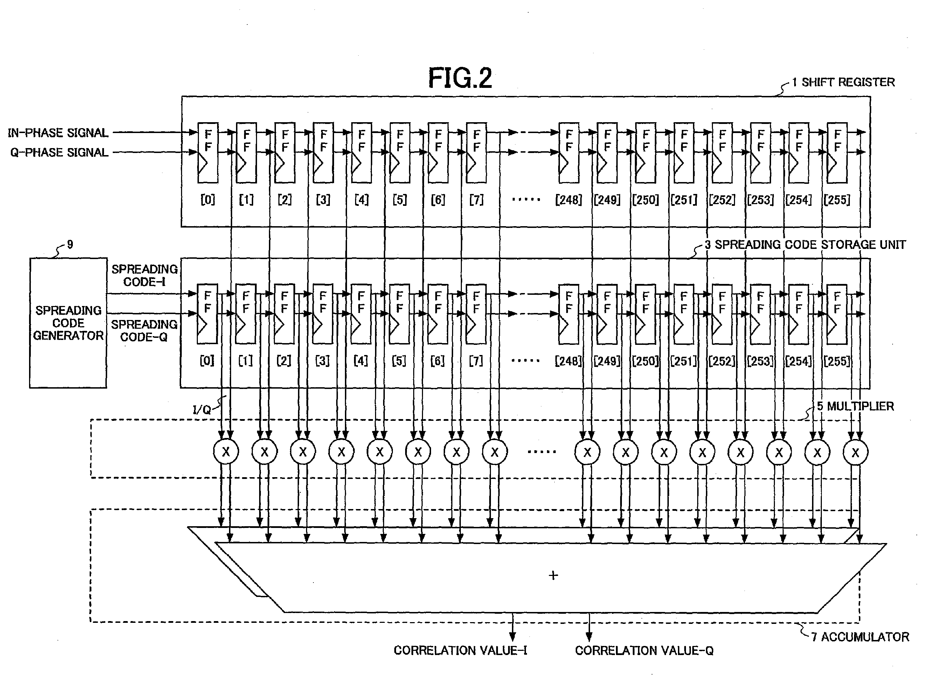

FIG. 2 is a circuit diagram showing an exemplary configuration of the matched filer in the related art.

The matched filter shown in FIG. 2 includes a shift register 1 for storing data and shifting bits, a spreading code storage unit 3 for storing the spreading codes, a multiplier 5, an accumulator 7 for summing products from the multiplier 5. In FIG. 2, a spreading code generator 9, which may be provided as an external unit, is also illustrated.

The matched filter in FIG. 2 is used when the spreading factor equals 256 chips, and the shift register 1 and the spreading code storage unit 3 are formed from 256 flip-flops (FF) corresponding to the 256 chips.

In addition, in the matched filter of the related art as illustrated in FIG. 1 and FIG. 2, a circuit for obtaining a correlation value is provided chip by chip. If sampling is performed at multiple sampling points in each chip, the so-called over-sampling, and a correlation value is obtained at each over-sampling phase, the number of the registers further increases.

As a result, depending on the requirement on the circuit, a finite-length impulse response digital filter having 500 to 1000 stages may be necessary. For example, if the matched filter in FIG. 2 is implemented to be a FIR filter, because of the shift register 1 and the spreading code storage unit 3, the size of the circuit ends up being very large. In addition, along with the increasing size of the circuit, because the shift register 1 frequently executes shift operations at the data rate, the operation rate of the shift register 1 is very high, and this results in a high current consumption.

### SUMMARY OF THE INVENTION

It is a general object of the present invention to solve one or more of the problems of the related art.

It is a more specific object of the present invention to provide a matched filter able to reduce a size of a circuit.

According to a first aspect of the present invention, there is provided a matched filter device including a data shift unit that has a number of taps equaling a divisor of a spreading factor and shifts a received data in units of bits at a data rate of the received data; a code storage unit that sequentially stores divided spreading codes, which are obtained by dividing a spreading code by the number of the taps, at a calculation rate higher than the data rate; and a calculation unit that calculates products of the received data stored in the data shift unit and the divided spreading codes stored in the code storage unit, and sums the products.

As an embodiment, the code storage unit stores the divided spreading codes sequentially based on a phase of the calculation of the sum of the products.

As an embodiment, the matched filter device may further include a code generation unit that successively and simultaneously generates spreading codes corresponding to different symbols as the divided spreading codes in one cycle of the data rate. The code generation unit may include a first code generator that successively generates spreading codes corresponding to a first symbol as the divided spreading codes in one cycle of the data rate, and a second code generator that successively generates spreading codes corresponding to a second symbol as the divided spreading codes in one cycle of the data rate. The code generation unit may further include a selection outputting unit that selectively outputs the divided spreading codes based on a phase of the calculation of the sum of the products.

As an embodiment, the matched filter device may further include an accumulation storage unit that accumulates correlation values corresponding to processing sequences having the same phase of the calculation.

As a second aspect of the present invention, there is provided a mobile communication terminal including a matched filter device. The matched filter device includes a data shift unit that has a number of taps equaling a divisor of a spreading factor and shifts a received data in units of bits at a data rate of the received data; a code storage unit that sequentially stores divided spreading codes, which are obtained by dividing a spreading code by the number of the taps, at a calculation rate higher than the data rate; and a calculation unit that calculates products of the received data stored in the data shift unit with the divided spreading codes stored in the code storage unit, and sums the products.

According to a third aspect of the present invention, there is provided a spreading code generation device including a code generation unit that successively and simultaneously generates spreading codes corresponding to different symbols as divided spreading codes in one cycle of a data rate; and a selection outputting unit that selectively outputs the divided spreading codes.

As an embodiment, the code generation unit successively and simultaneously generates the spreading codes divided by a divisor of a spreading factor as the divided spreading codes. The selection outputting unit selectively outputs the divided spreading codes based on a phase of a calculation of the sum of products of a received data with the divided spreading codes.

According to a fourth aspect of the present invention, there is provided a mobile communication terminal including a spreading code generation device. The spreading code generation device include a code generation unit that successively and simultaneously generates spreading codes corresponding to different symbols as divided spreading codes in one cycle of a data rate; and a selection outputting unit that selectively outputs the divided spreading codes.

These and other objects, features, and advantages of the present invention will become more apparent from the following detailed description of the preferred embodiments given with reference to the accompanying drawings.

### BRIEF DESCRIPTION OF THE DRAWINGS

FIG. 1 is a circuit diagram showing the principle of a matched filer in the related art;
FIG. 2 is a circuit diagram showing a detailed configuration of the matched filer in the related art;
FIG. 3 is a circuit diagram showing an exemplary configuration of a matched filer according to an embodiment of the present invention;
FIGs. 4A through 4D are data diagrams explaining exemplary operations of a shift register 11 of the matched filter according to the present embodiment;
FIG. 5 is a block diagram showing an exemplary configuration of the spreading code generator 19 of the matched filer according to the present embodiment;
FIG. 6 shows data diagrams illustrating timing of generating the divided spreading codes in the code generator 19-1 of the spreading code generator 19;
FIG. 7 shows data diagrams illustrating timing of generating the divided spreading codes in the code generator 19-2 of the spreading code generator 19;
FIG. 8 is a data diagram showing timing of selecting and outputting the divided spreading codes in the spreading code generator 19;
FIG. 9 is a data diagram, continued from FIG. 8, illustrating the timing of selecting and outputting the divided spreading codes in the spreading code generator 19;
FIG. 10 shows data diagrams explaining the relation between the received data and the divided spreading code in the matched filter according to the present embodiment;
FIG. 11 shows data diagrams, continued from FIG. 10, explaining the relation between the received data and the divided spreading code in the matched filter according to the present embodiment;
FIG. 12 shows data diagrams explaining the timing of the sum-of-product calculation in the matched filter according to the present embodiment;
FIG. 13 shows data diagrams, continued from FIG. 12, explaining the timing of the sum-of-product calculation in the matched filter according to the present embodiment;
FIG. 14 shows data diagrams, continued from FIG. 13, explaining the timing of the sum-of-product calculation in the matched filter according to the present embodiment;
FIG. 15 shows data diagrams illustrating address allocation in the RAM of the accumulation and storage unit 21; and
FIG. 16 shows data diagrams, continued from FIG. 15, illustrating the address allocation in the RAM of the accumulation and storage unit 21.

### DESCRIPTION OF THE PREFERRED EMBODIMENTS

Below, preferred embodiments of the present invention are explained with reference to the accompanying drawings.

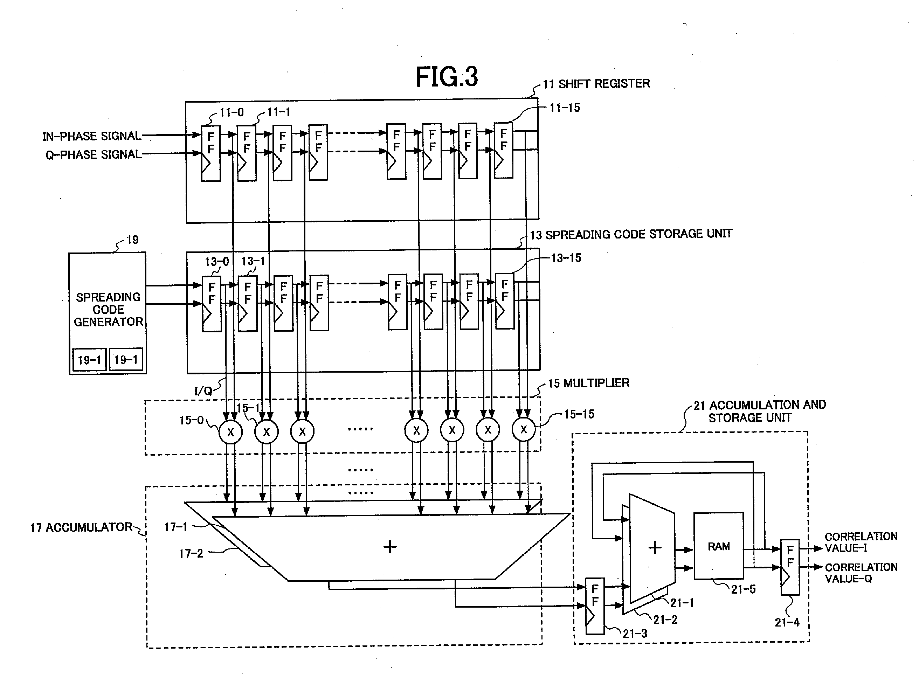

FIG. 3 is a circuit diagram showing a configuration of a matched filer according to an embodiment of the present invention.

As illustrated in FIG. 3, the matched filer of the present invention includes a shift register 11 and a spreading code storage unit 13, a multiplier 15, an accumulator 17, a spreading code generator 19, and an accumulation and storage unit 21.

The matched filer of the present invention is characterized by utilizing a difference between a data rate, at which received data are bit-shifted in the shift register 11, and a calculation rate, at which calculations of the sum of products of the received data and spreading codes are performed in the multiplier 15 and the accumulator 17.

In particularly, in order to take full advantage of this difference between the data rate and the calculation rate, both the shift register 11 and the spreading code storage unit 13 have a 16-tap register. In the present invention, functions of a 256-tap matched filter in the related art are provided by the 16-tap matched filter.

The shift register 11, for example, stores the in-phase signal and the Q-phase signal (below, simply referred to as "received signal") obtained by the aforesaid first-order demodulation in the mobile station, and shifts the received data in units of bits at a data rate of the received data. For example, in the present embodiment, the received data is shifted in units of bits at a data rate of 3.84 MHz.

As described above, the matched filter of the present invention is used with the spreading factor equaling 256 chips. The shift register 11 has sixteen flip-flop circuits 11-0 through 11-15. The sixteen flip-flop circuits 11-0 through 11-15 are equivalent to sixteen taps, which is the square root of the spreading factor 256. In the shift register 11, the 16-bit received data is shifted in order.

The spreading code generator 19 generates spreading codes of the in-phase signal and the Q-phase signal, which are used in correlation calculations. In the present embodiment, the spreading code generator 19 generates the spreading codes of the in-phase signal and the Q-phase signal, respectively, while being controlled by a highfrequency clock signal generated in an external unit (not-illustrated). The calculation rate of the correlation calculation, which is given by the highfrequency clock signal, is approximately 61 MHz, roughly sixteen times of the data rate (3.84 MHz) of the received data mentioned above.

The thus generated spreading codes are parts of a spreading code including totally 256 chips, each part having sixteen chips. Below, such a part of the spreading code is referred to as a "divided spreading code".

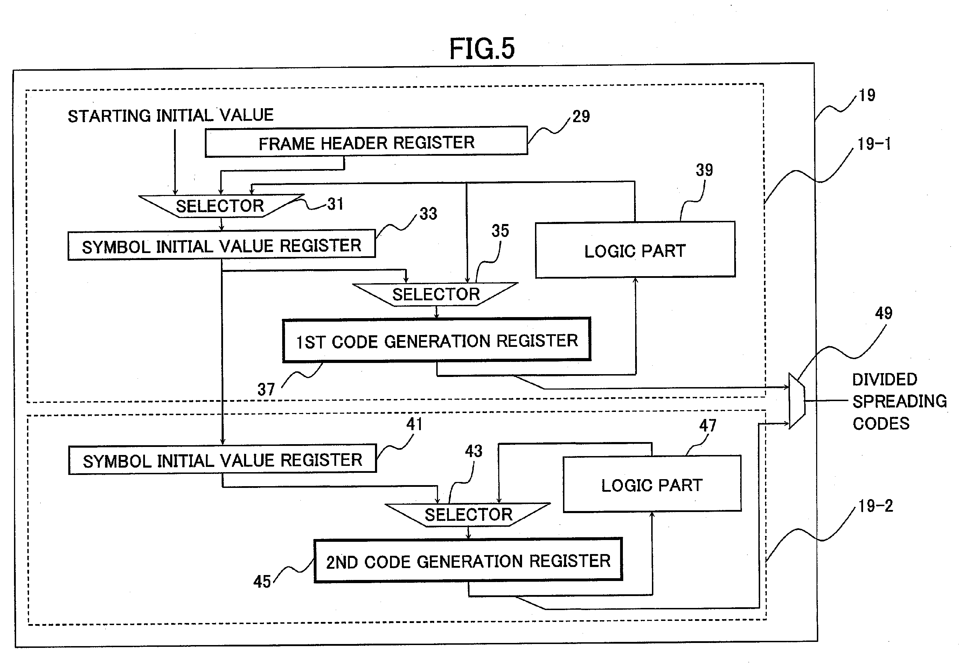

In the present embodiment, the spreading code generator 19 has two code generators 19-1, 19-2 (refer to FIG. 5), and the two code generators 19-1, 19-2 generate the divided spreading codes of the in-phase signal and the Q-phase signal. In addition, the two code generators 19-1, 19-2 generate spreading codes related to different symbols as the divided spreading codes simultaneously and successively in one cycle of the data rate of 3.84 MHz, that is, in the period before the received data is bit-shifted in the shift register 11.

Based on specified generation rules, the spreading code generator 19 selectively outputs the divided spreading codes successively generated in the code generators 19-1 and 19-2. In the present embodiment, because of the selective output operation, the divided spreading codes are output to the spreading code storage unit 13 for ten times in one cycle of the data rate of 3.84 MHz.

As described below, the specified generation rules define the intrinsic and regularly assigned divided spreading codes, and the regular sequence of generating the divided spreading codes of 16-bit received data, which is the multiplicand in the multiplication carried out in the multiplier 15.

The spreading code storage unit 13 sequentially stores the divided spreading codes of the in-phase signal and the Q-phase signal generated in the spreading code generator 19. In the present embodiment, the spreading code storage unit 13 operates at the calculation rate of 61 MHz, the same as the spreading code generator 19.

The same as the shift register 11, the spreading code storage unit 13 has sixteen flip-flop circuits 13-0 through 13-15. Thus, in the spreading code storage unit 13, a divided spreading code having sixteen chips is replaced in each clock pulse of the calculation rate at 61 MHz.

The multiplier 15 multiplies the 16-bit received data stored in the shift register 11 with the 16-bit divided spreading code stored in the spreading code storage unit 13. Specifically, the multiplier 15 multiplies the received data of the in-phase signal and the Q-phase signal with their divided spreading codes. Same as the spreading code generator 19, the multiplier 15 also operates at the calculation rate of 61 MHz.

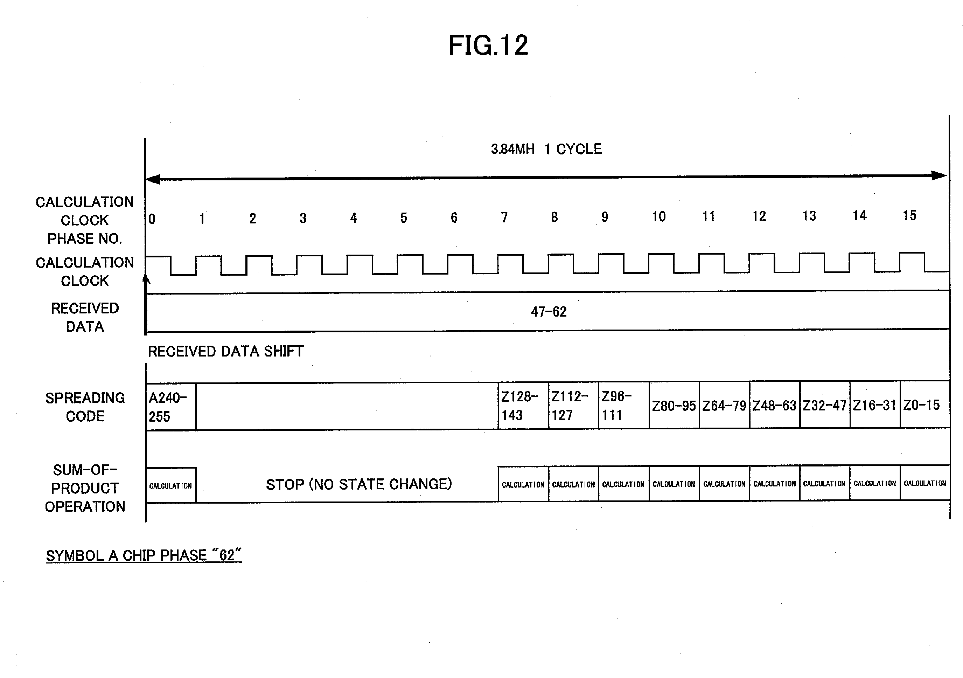

In the present embodiment, the multiplier 15 has sixteen multiplication circuits 15-0 through 15-15, which is equal to the numbers of the flip-flop circuits in the shift register 11 and the spreading code storage unit 13. Thus, in each clock of the calculation rate of 61 MHz, the multiplication operation is performed for sixteen times, equivalent to the sixteen taps. Further, the multiplication operation is carried out in ten cycles out of the sixteen cycles of the calculation rate of 61 MHz, as described below with reference to FIG. 12.

Next, after one cycle of the data rate of 3.84 MHz, that is, after the received data stored in the shift register 11 are shifted by one bit, the multiplier 15 multiplies newly held received data with divided spreading codes sequentially stored in the spreading code storage unit 13 corresponding to the newly held received data.

The accumulator 17 sums the products from the multiplier 15. The accumulator 17 has two sub-accumulators 17-1 and 17-2 for summing products of the in-phase signal and the products of the Q-phase signal, respectively.

Same as the multiplier 15, the accumulator 17 operates at the calculation rate of 61 MHz. For this reason, the accumulator 17 sums sixteen products, which are results of multiplication operations executed in one clock of the calculation rate of 61 MHz, and outputs the sum as a correlation value.

The accumulation and storage unit 21 accumulates the correlation value from the accumulator 17 on a correlation value, which is already stored in the accumulation and storage unit 21 and has the same calculation phase as the newly obtained correlation value. Then the accumulation and storage unit 21 stores the result of the accumulation operation.

Same as the spreading code generator 19, the accumulation and storage unit 21 operates at the calculation rate of 61 MHz. For this reason, the accumulation and storage unit 21 accumulates the correlation value from the accumulator 17 in one clock of the calculation rate of 61 MHz. Further, corresponding to a preceding multiplication operation, this multiplication operation is performed ten times in each cycle of the data rate of 3.84 MHz (refer to FIG. 12).

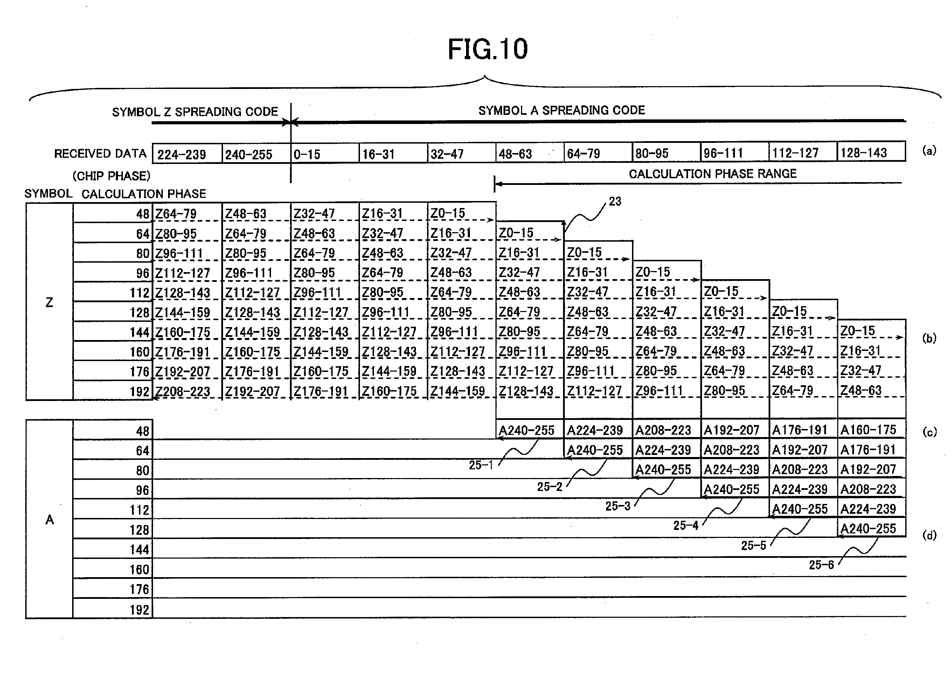

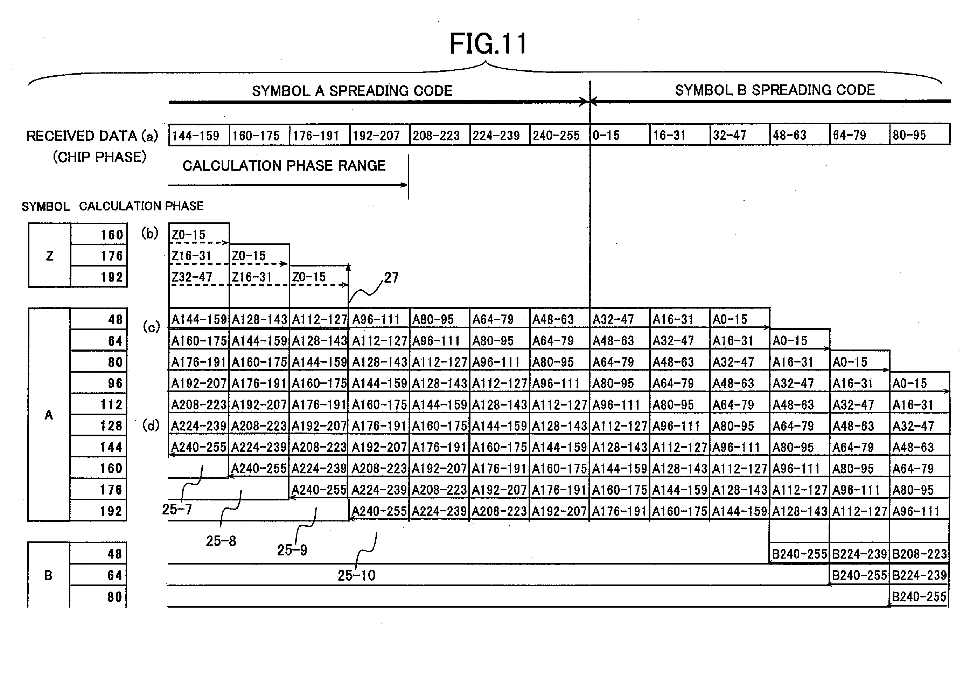

The aforesaid calculation phase is a quantity for identifying a processing sequence of the correlation calculation, as described below with reference to FIG. 10 and FIG. 11. For example, in the correlation calculation of a 256-chip received data and a 256-chip spreading code, in the period when the received data is shifted by one bit, the multiplication operation is performed 256 times. However, the 256 multiplication operations may be separated into sixteen multiplication operations in units of sixteen chips, and the thus obtained sixteen multiplication operations may be executed in a time sharing manner. In the present embodiment, the processing sequence of the sixteen multiplication operations corresponds to a processing sequence with one calculation phase.

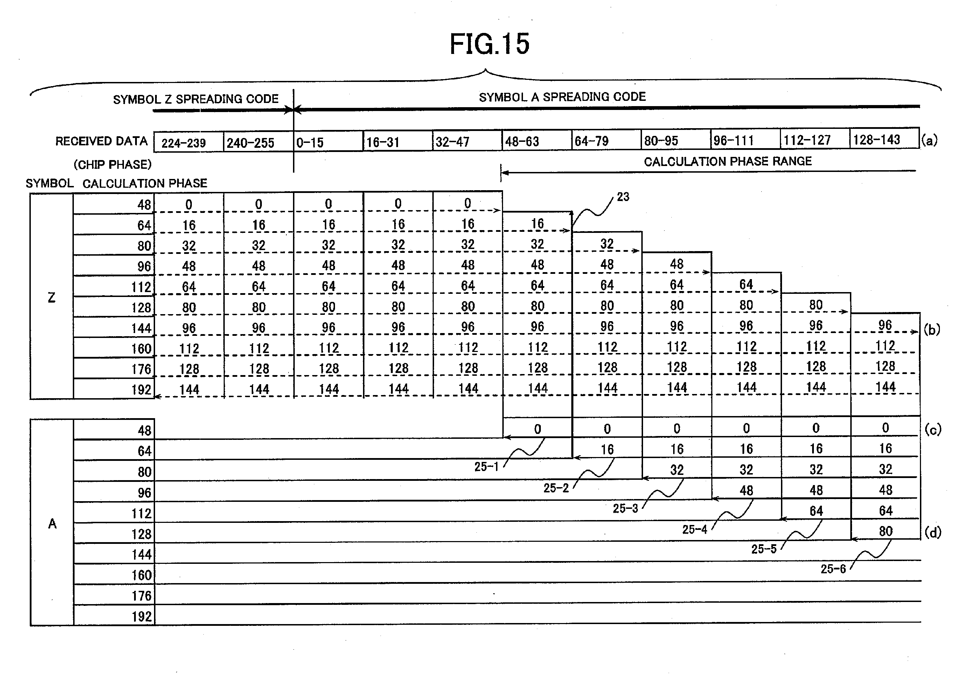

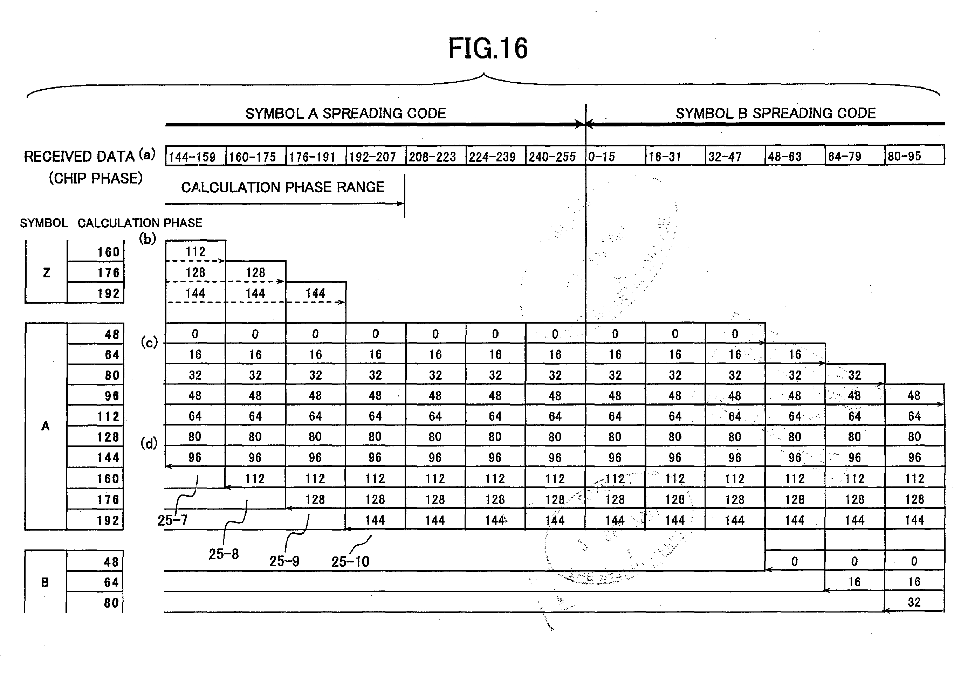

In the present embodiment, the accumulation and storage unit 21 includes an accumulator 21-1 and an accumulator 21-2, flip-flop circuits (FF) 21-3 and 21-4, and a RAM (Randomly Accessed Memory) 21-5. A single correlation value from the accumulator 17 is associated with an address in the RAM 21-5 in advance in a regular way based on the preceding calculation phase (as illustrated in FIG. 15 and FIG. 16). The accumulator 21-1 and accumulator 21-2 are for the in-phase component and the Q-phase component of the correlation value, respectively.

The correlation value from the accumulator 17 is temporarily stored in the flip-flop circuit (FF) 21-3 until the time of reading the RAM 21-5. In the accumulators 21-1 and 21-2, the stored correlation value and a correlation value read out from the RAM 21-5 are summed. The resulting sum is stored at the address the RAM 21-5 read just now. The correlation value stored in the RAM 21-5 is output after the correlation value is stored in the flip-flop circuit (FF) 21-4 for a while. Specifically, the in-phase component and the Q-phase component of the correlation value are output separately.

Below, an explanation is given to the operations of the matched filter of the present embodiment.

First, while holding the received data, the shift register 11 shifts the received data at the data rate of 3.84 MHz.

Below, states of the received data held by the shift register 11 are explained.

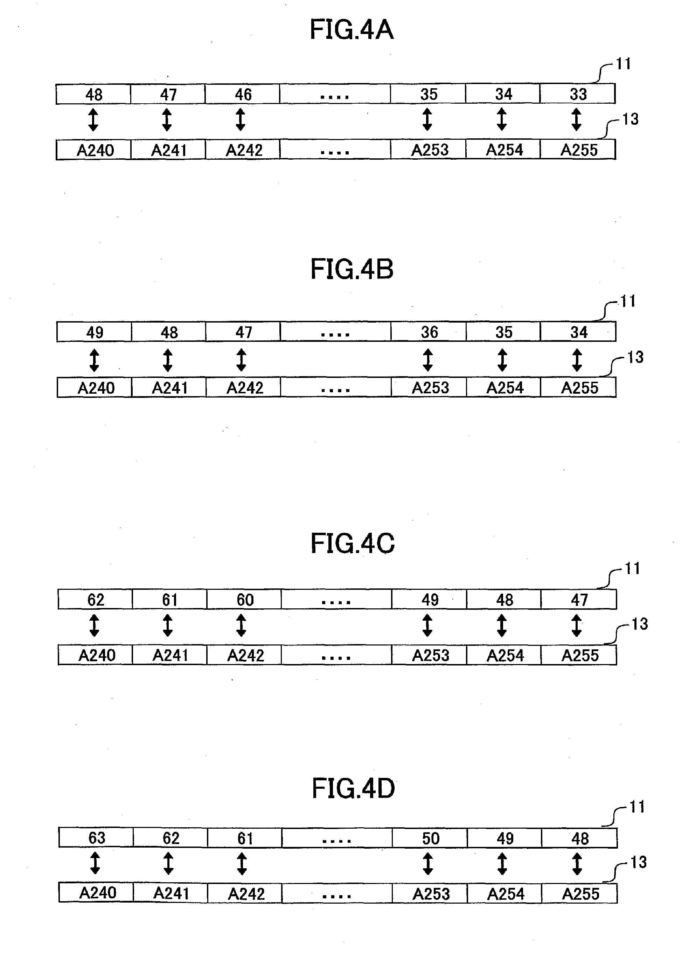

FIGs. 4A through 4D are data diagrams explaining the operations of the shift register 11 of the matched filter according to the present embodiment.

In FIGs. 4A through 4D, the 256-chip received data "0, ..., 15, ..., 48, ..., 63, ..., 255" are divided into parts in units of sixteen chips, and each part of the received data includes sixteen chips (referred to as "basic received data", below). Here, the explanation is made taking basic received data "48 - 63" as an example.

As illustrated in FIG. 4A, a received data "33 - 48" is held in the shift register 11, and in the spreading code storage unit 13, a divided spreading code "A240 - 255" is stored. The divided spreading code "A240 - 255" includes the first chip of the spreading code related to a symbol A.

In the present embodiment, for any basic received data among the basic received data "0 - 15" through "240 - 255", a state in which the first chip is stored in the shift register 11 for the first time is defined to be a state of the basic received data having a phase of 0/16. Therefore, FIG. 4A shows the state of the basic received data "48 - 63" having a phase of 0/16.

In FIG. 4B, the received data "34 - 49" is held in the shift register 11, and the same divided spreading code "A240 - 255" as in FIG. 4A is stored in the spreading code storage unit 13. The received data "34 - 49" in FIG. 4B is obtained by shifting the received data "33 - 48" shown in FIG. 4A by one bit. Thus, FIG. 4B shows the state of the basic received data "48 - 63" having a phase of 1/16.

In FIG. 4C, the received data "47 - 62" is held in the shift register 11, and the same divided spreading code "A240 - 255" as that shown in FIG. 4A is stored in the spreading code storage unit 13. The received data "47 - 62" in FIG. C is obtained by shifting the received data "33 - 48" shown in FIG. 4A by fourteen bits. Thus, FIG. 4C shows the state of the basic received data "48 - 63" having a phase of 14/16.

Further, in FIG. 4D, the received data "48 - 63" is held in the shift register 11, and the same divided spreading code "A240 - 255" as that shown in FIG. 4A is stored in the spreading code storage unit 13. The received data "48 - 63" in FIG. 4D is obtained by shifting the received data "33 - 48" shown in FIG. 4A by fifteen bits. Hence, FIG. 4D shows the state of the basic received data "48 - 63" having a phase of 15/16.

It should be noted that although the phase is defined above for each basic received data including sixteen chips, the phase can also be defined for the received data including 256 chips. For example, an offset of a chip of the received data relative to the first chip of the received data can be defined to be a chip phase of the chip. In detail, for example, if the phase of the first chip is defined to be zero, the chip phase of the chip "48" of the received data shown in FIG. 4A is 48.

FIG. 5 is a block diagram showing an exemplary configuration of the spreading code generator 19 of the matched filer according to the present embodiment.

As illustrated in FIG. 5, the spreading code generator 19 includes two code generators 19-1, 19-2, and a selector 49.

The code generator 19-1 includes a frame header register 29 for storing a value of a header of a frame, a selector 31, a symbol initial value register 33 for storing a symbol initial value, a selector 35, a first code generation register 37 for generating a spreading code, a logic part 39 that changes the value held in the first code generation register 37 by moving forward by sixteen chips.

Similarly, the code generator 19-1 includes a symbol initial value register 41 for storing a symbol initial value, a selector 43, a second code generation register 45 for generating a spreading code, a logic part 47 that changes the value held in the second code generation register 45 by moving forward by sixteen chips.

Below, prior to explanation of timing of operations of the spreading code generator 19, an explanation is given of the relation between the received data and the divided spreading code in the matched filter with reference to FIG. 10 and FIG. 11.

FIG. 10 shows data diagrams explaining the relation between the received data and the divided spreading codes in the matched filter according to the present embodiment.

FIG. 11 shows data diagrams, continued from FIG. 10, explaining the relation between the received data and the divided spreading codes in the matched filter according to the present embodiment.

Data diagrams in FIG. 11 are temporally continued from those in FIG. 10 at points a, b, c, and d, and these data diagrams in FIG. 10 and FIG. 11 illustrate the relation between the received data stored in the shift register 11 and the divided spreading codes sequentially stored in the spreading code storage unit 13.

At the tops of FIG. 10 and FIG. 11, sections of spreading codes are presented which are obtained by spreading spectra of a series of symbols Z, A, and B by using spreading codes having 256 chips. In connection with these spreading code sections, the received data totally including 256 chips are divided into sixteen parts, corresponding to chips 0-15 through chips 240-255, respectively.

In FIG. 10, a "symbol" column presents symbols Z, A, and B, a "calculation phase" column presents numbers (48, 64, ..., 192) of phases of correlation calculation concerning the divided spreading codes related to the symbols Z, A, and B, respectively.

For simplicity of description, when the first sixteen chips of a spreading code are involved in correlation calculation with the received data, the number of the phase of the correlation calculation (below, simply abbreviated to be "phase number", or "calculation phase" where necessary) is represented by the chip phase of the first chip of the received data. For example, in FIG. 10, the phase number related to the symbol A indicated by an arrow 25-1 is 48, and this means that the processing sequence related to the phase number 48 starts from a chip phase of 48 of the basic received data.

That is to say, the calculation phase 48 identifies a processing sequence starting from the state of the basic received data "48-63" having the phase of 0/16, that is, an operation of time-division sum-of-product calculation involving in the divided spreading code "A240-255", as indicated by the arrow 25-1.

As mentioned above, this processing sequence is equivalent to 256 multiplication operations executed simultaneously in the period of shifting the received data by one bit in the 256-chip matched filter in the related art.

As described with reference to FIGs. 4A and 4B, the state in FIG. 10 and FIG. 11 is the state of the basic received data having the phase of 15/16. Therefore, for example, from the state of the basic received data "48 - 63" having the phase of 0/16, a code group, which includes the divided spreading code "A240-255" and "Z128-148" through "Z0-15", is generated sixteen times in each phase state.

In FIG. 10, an arrow 23 indicates a generation sequence at this moment, specifically, the spreading code related to the present symbol A is given priority over others, and divided spreading codes are generated from the first chip of each spreading code in ascending order.

Returning to FIG. 5 for further description of the operations of the spreading code generator 19. For example, in the spreading code sections related to the symbol A illustrated at the tops in FIG. 10 and FIG. 11, divided spreading codes related to both symbol Z and symbol A are generated in the same time period. In these sections, the symbol A is the present symbol, and the symbol Z is the preceding symbol. In addition, in these sections, for example, the divided spreading codes related to the symbol A are generated in the code generator 19-1, and the divided spreading codes related to the symbol Z are generated in the code generator 19-2.

Similarly, in the spreading code sections related to the symbol B, divided spreading codes related to both the symbol A and symbol B are generated in the same time period. In these sections, the symbol B is the present symbol, and the symbol A is the preceding symbol. In addition, in these sections, for example, the divided spreading codes related to the symbol B are newly generated in the code generator 19-1, and the divided spreading codes related to the symbol A are generated in the code generator 19-2.

In this way, the code generator 19-1 and the code generator 19-2 are arranged in correspondence with the divided spreading codes related to the present symbol, and the divided spreading codes related to the preceding symbol, respectively.

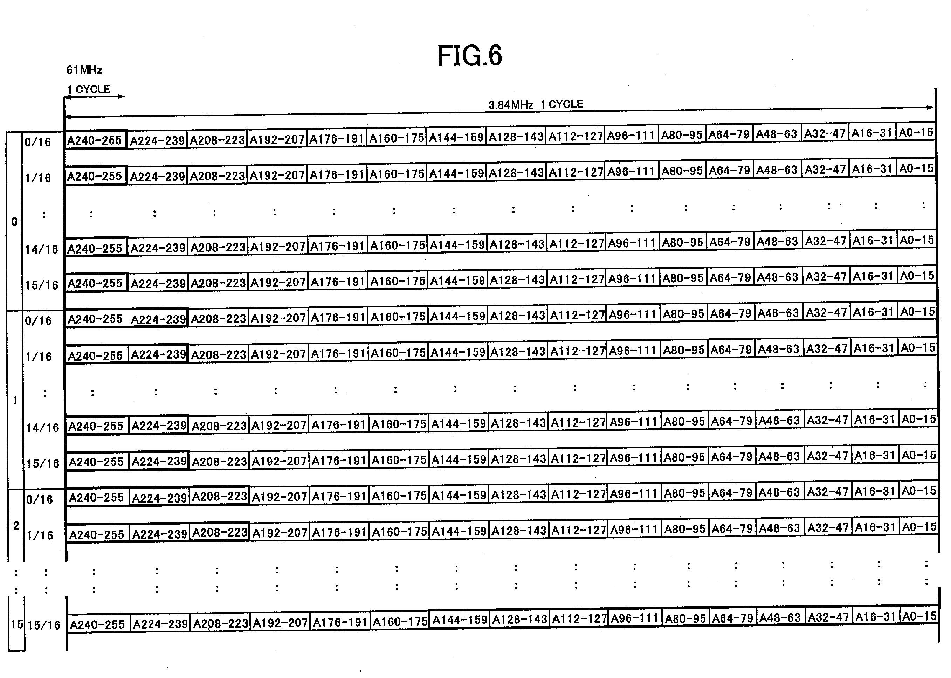

FIG. 6 shows data diagrams illustrating timing of generating the divided spreading codes in the code generator 19-1 of the spreading code generator 19.

In FIG. 6, the horizontal width of FIG. 6 indicates one cycle of the data rate (3.84 MHz) of the received data as shown at the top of FIG. 6, and the horizontal direction from the left to the right in FIG. 6 represents the time direction. On the other hand, the vertical direction in FIG. 6, counts "0", "1", ..., "15" are shown to represent the basic received data. As illustrated in FIGs. 4A and 4B, these counts represent the phase states from 0/16 to 15/16. In each of these phase states, the divided spreading code "A240-255" through "A0-15" related to the present symbol A are illustrated.

As illustrated in FIG. 6, in the present embodiment, the divided spreading codes are generated from the first sixteen chips "A240-255" in one cycle of the data rate of 3.84 MHz at the calculation rate of 61 MHz, and this generation operation is repeated successively for sixteen times in ascending order.

Further, the divided spreading codes enclosed by thick frames are selected by the selector 49 and output as the output signal of the spreading code generator 19.

As a result, in each of the phase states from 0/16 to 15/16 of certain basic received data, the same divided spreading codes are output at predetermined timing in one cycle of the data rate of 3.84 MHz.

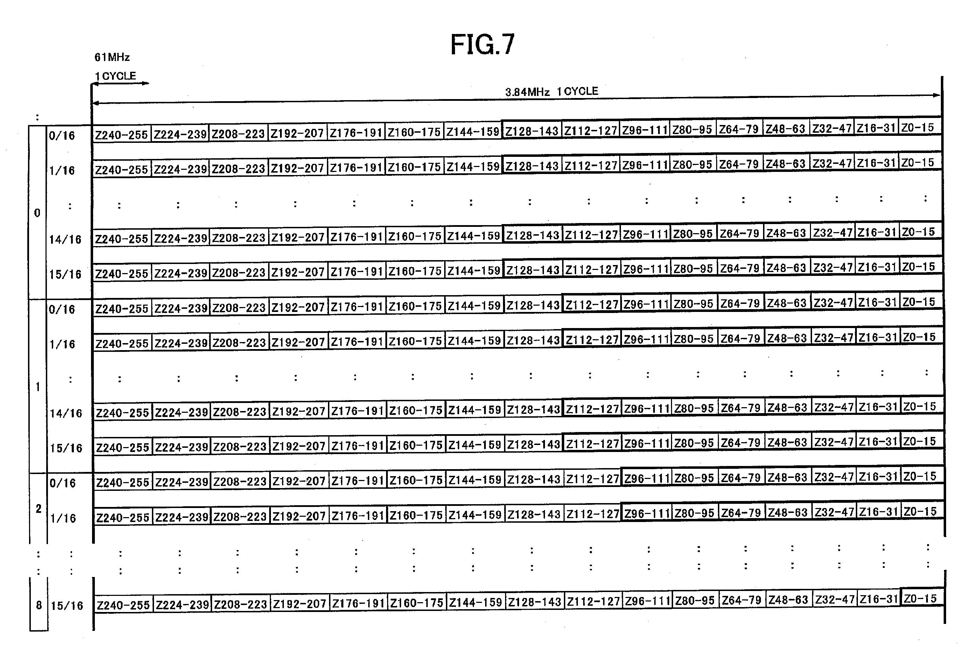

FIG. 7 shows data diagrams illustrating timing of generating the divided spreading codes in the code generator 19-2 of the spreading code generator 19.

The form of the data diagrams in FIG. 7 is the same as that in FIG. 6, and generation of the divided spreading codes and the generation timing are illustrated in connection with the counts of the received data and the phase states shown in FIG. 6.

Similarly, the divided spreading codes are generated from the first sixteen chips "Z240-255" in one cycle of the data rate of 3.84 MHz at the calculation rate of 61 MHz, and this generation operation is repeated successively for sixteen times in ascending order. Further, the divided spreading codes enclosed by thick frames are selected by the selector 49 and output as the output signal of the spreading code generator 19. As a result, in each of the phase states from 0/16 to 15/16 of certain basic received data, the same divided spreading codes are output at predetermined timing in one cycle of the data rate of 3.84 MHz.

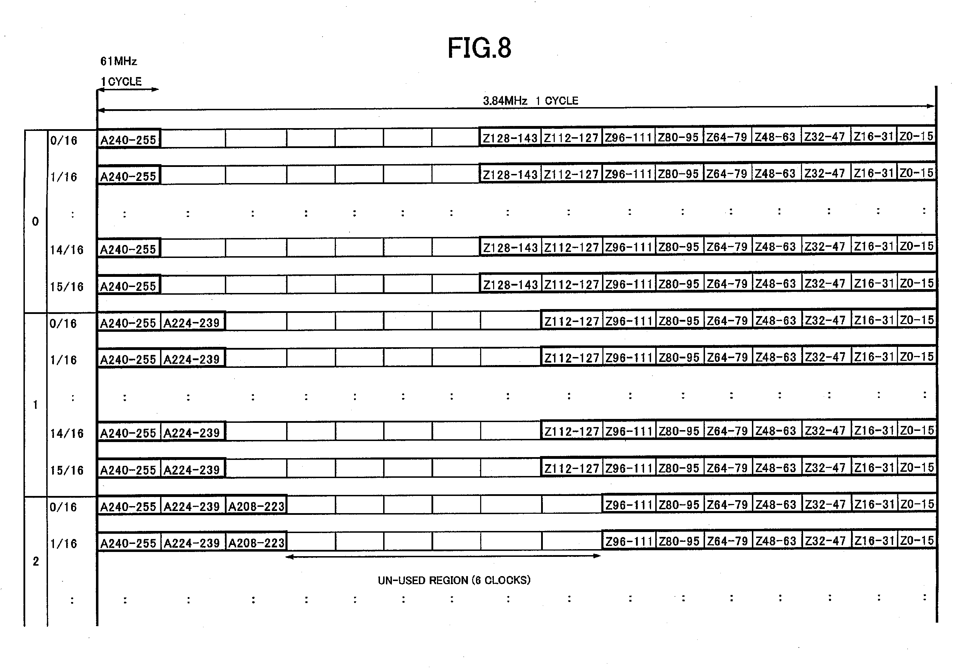

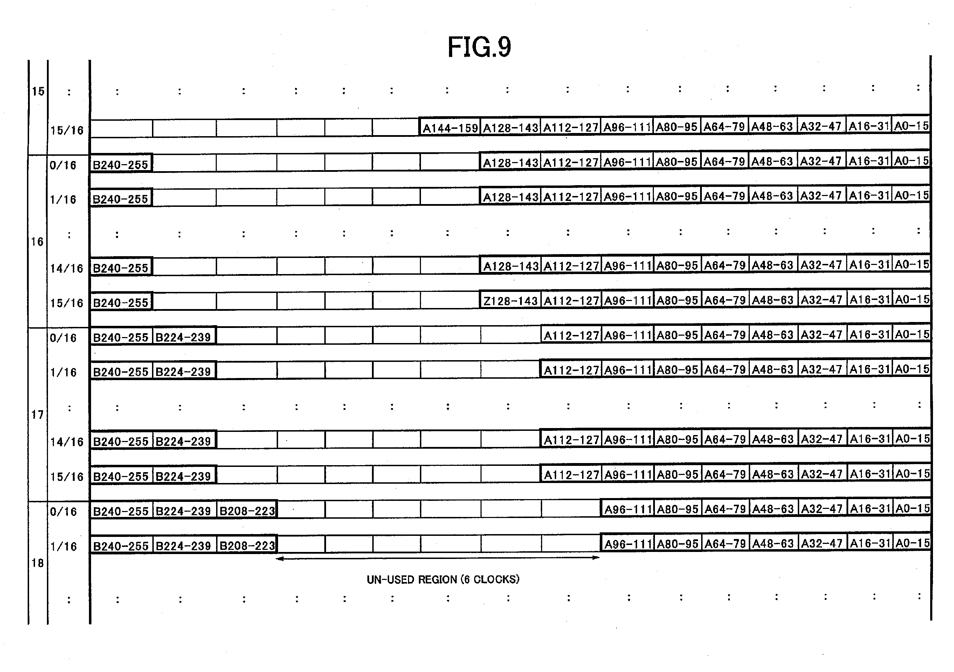

Below, with reference to FIG. 8 and FIG. 9, and also to FIG. 5 though FIG. 7 when necessary, an explanation is made of the operations of the code generators 19-1 and 19-2 for generating spreading codes near the centers of the spreading code sections of the symbol A illustrated in FIG. 10 and FIG. 11.

In FIG. 5, an operation starting initial value is the initial value of the spreading code, for example, the operation starting initial value indicates the position of a scramble code. This initial value is loaded in the symbol initial value register 33 and the symbol initial value register 41 via the selector 31 at a timing earlier than the chip phase "0".

The value of the frame header stored in the frame header register 29 is the value of the beginning of a spreading code, and is loaded in the symbol initial value register 33 and the symbol initial value register 41 via the selector 31 when one frame of the scramble code comes to the end.

In FIG. 6 and FIG. 7, for example, associated with the count "0", phase states from 0/16 to 15/16 are presented. In the following, an explanation is given of the phase state of 0/16 with the count to be 0. The count 0 corresponds to the received data "48-63" in FIG. 10.

At this moment, an initial value "A240-255" of a spreading code related to the symbol A is stored in the symbol initial value register 33 of the code generator 19-1 shown in FIG. 5. This initial value is stored in the first code generation register 37 via the selector 35. On the other hand, an initial value "Z240-255" of a spreading code related to the symbol Z is stored in the symbol initial value register 41 of the code generator 19-2 shown in FIG. 5, and this initial value is stored in the second code generation register 45 via the selector 43.

In response to the first pulse of the clock signal at the calculation rate of 61 MHz, the initial value "A240-255" stored in the first code generation register 37 is input to the selector 49. At the same time, this initial value is shifted forward by sixteen chips in the logic part 39, and converted to the next divided spreading code "A224-239". The next divided spreading code "A224-239" is stored in the first code generation register 37.

Similarly, in response to the first pulse of the clock signal at the calculation rate of 61 MHz, the initial value "Z240-255" stored in the second code generation register 45 is input to the selector 49. At the same time, this initial value is shifted forward by sixteen chips in the logic part 47, converted to the next divided spreading code "Z224-239", and stored in the second code generation register 45.

The selector 49 selectively outputs the divided spreading codes based on the aforesaid generation rules. The generation rule is explained in detail below.

FIG. 8 is a data diagram showing timing of selecting and outputting divided spreading codes in the spreading code generator 19.

FIG. 9 is a data diagram, continued from FIG. 8, illustrating the timing of selecting and outputting the divided spreading codes in the spreading code generator 19.

The generation rule may have four aspects.

As the first aspect, generation positions of all divided spreading codes of the spreading code related to the present symbol A (that is, the selective output positions), are fixed in one cycle of the data rate of 3.84 MHz. Furthermore, for example, the first sixteen chips "A240-255" of the spreading code related to the present symbol A are generated at the rise time of the first clock pulse of the clock signal at the calculation rate of 61 MHz, and the last sixteen chips "A0-15" of the spreading code are generated at the rise time of the 16th clock pulse, as illustrated in FIG. 6 and FIG. 8.

As the second aspect, generation positions of all the divided spreading codes of the spreading code related to the preceding symbol Z (that is, the selective output positions) are fixed in one cycle of the data rate of 3.84 MHz. Furthermore, for example, the first sixteen chips "Z240-255" of the spreading code related to the preceding symbol Z are generated at the rise time of the first clock pulse of the clock signal at the calculation rate of 61 MHz, and the last sixteen chips "Z0-15" of the spreading code are generated at the rise time of the 16th clock pulse, as illustrated in FIG. 7 and FIG. 8.

In the selective output operation according to the first and the second aspects, when initial values are input to the code generators 19-1 and 19-2, the spreading codes having 256 chips are generated simultaneously and successively in one cycle of the data rate of 3.84 MHz. Since the divided spreading codes are selectively output in units of sixteen chips in one cycle of the data rate of 3.84 MHz, a cue function is not necessary any more, and the size of the circuit can be reduced.

The third aspect of the generation rule is based on the calculation phase shown in FIG. 10 and FIG. 11. For example, as indicated by the arrow 23 in FIG. 10, because processing sequences corresponding to phases of a number of correlation calculations are executed in each cycle of the data rate in a time division manner, necessary divided spreading codes are selected and output in ascending order. As a result, in connection with the first and the second aspects, different divided spreading codes are generated simultaneously and successively.

The fourth aspect of the generation rule is based on setting of a phase range in which calculations are to be carried out (below, simply referred to as "object phase range"). In the present embodiment, the divided spreading codes are selected and output in ten cycles out of sixteen cycles of the calculation rate of 61 MHz.

Based on the above generation rules, in a period when the count of the basic received data equals 0, that is, in the period from the phase state 0/16 to the phase state 15/16 of the basic received data "48-63" (as illustrated in FIG. 10), the processing sequence of the calculation phase related to the present symbol A is in the first cycle, and the processing sequence of the calculation phase related to the preceding symbol Z is in the last 9 cycles.

Specifically, at appropriate timing related to the generation position of each divided spreading code, the selector 49 outputs the first sixteen chips of the spreading code related to the symbol A, and outputs the last 16*9 chips of the spreading code related to the symbol Z. Hence, in response to the first pulse of the clock signal, the selector 49 outputs the divided spreading code "A240-255".

Next, in response to the second pulse of the clock signal at the calculation rate of 61 MHz, the divided spreading code "A224-239" stored in the first code generation register 37 is input to the selector 49. At the same time, the divided spreading code "A224-239" is converted to the next divided spreading code "A208-223" in the logic part 39, and is stored in the first code generation register 37.

Similarly, in response to the second pulse of the clock signal at the calculation rate of 61 MHz, the divided spreading code "Z224-239" stored in the second code generation register 45 is input to the selector 49. At the same time, the divided spreading code "Z224-239" is converted to the next divided spreading code "Z208-223" in the logic part 47, and is stored in the second code generation register 45. In this case, the selector 49 does not output divided spreading codes.

As illustrated in FIG. 6 and FIG. 7, the above operations are repeated over the subsequent divided spreading codes "A208-223" through "A144-159", and the divided spreading codes "Z208-223" through "Z144-159".

That is to say, as illustrated in FIG. 8, in a period of six cycles of the calculation rate of 61 MHz, even though the divided spreading codes related to the symbol Z and symbol A are successively generated, because of the selective output by the selector 49, these divided spreading codes are not output from the spreading code generator 19. Therefore, it is possible to reduce the number of operations of replacing the divided spreading codes in the spreading code storage unit 13, furthermore, to reduce the number of the sum-of-product calculation accompanying the above replacement operations.

In addition, in the present embodiment, as illustrated in FIG. 10 and FIG. 11, the object phase range is set to be a section of 160 chips of the received data. Accordingly, as indicated by the arrow 23 in FIG. 10, correlation calculations are executed for ten times in one cycle of the data rate. Therefore, during the period when the count of the basic received data equals 0, the selector 49 outputs the last 16*9 chips of the spreading codes related to the symbol Z as the divided spreading codes.

Next, in response to the eighth pulse of the clock signal at the calculation rate of 61 MHz, the divided spreading code "A128-143" stored in the first code generation register 37 is input to the selector 49. At the same time, the divided spreading code "A128-143" is converted to the next divided spreading code "A112-127" in the logic part 39, and is stored in the first code generation register 37.

Similarly, in response to the eighth pulse of the clock signal at the calculation rate of 61 MHz, the divided spreading code "Z128-143" stored in the second code generation register 45 is input to the selector 49. At the same time, the divided spreading code "Z128-143" is converted to the next divided spreading code "Z112-127" in the logic part 47, and is stored in the second code generation register 45.

Based on the setting of the object phase range, the selector 49 selects and outputs the divided spreading code "Z128-143". The above operations are repeated over the subsequent divided spreading codes "A112-127" through "A0-15", and the divided spreading codes "Z112-127" through "Z0-15". Hence, the selector 49 then outputs the divided spreading codes "Z112-127" through "Z0-15" related to the symbol Z.

The above descriptions with reference to FIG. 6 and FIG. 7 are related to the phase state of 0/16 with the count being 0. The spreading code generator 19 further performs the same operation for 15 times up to the phase state of 15/16.

FIG. 8 only presents the divided spreading codes which are selected from the generated divided spreading codes as illustrated in FIG. 6 and FIG. 7. In the period when the count of the basic received data equals 0, the divided spreading codes "A240-255" and "Z128-143" through "Z0-15" are output at the calculation rate of 61 MHz.

Next, an explanation is given of the state of the phase 0/16 with the count equaling 1 as illustrated in FIG. 6 and FIG. 7. The count "1" corresponds to the received data "64-79" in FIG. 10.

Referring to FIG. 5, an initial value "A240-255" of the spreading codes related to the symbol A is stored in the symbol initial value register 33 of the code generator 19-1 shown in FIG. 5 and in the first code generation register 37 via the selector 35. On the other hand, an initial value "Z240-255" of the spreading code related to the symbol Z is stored in the symbol initial value register 41 of the code generator 19-2, and further in the second code generation register 45 of the code generator 19-2 via the selector 43.

In response to the first pulse of the clock signal at the calculation rate of 61 MHz, the initial value "A240-255" stored in the first code generation register 37 is input to the selector 49. At the same time, this initial value is converted to the next divided spreading code "A224-239" in the logic part 39, and stored in the first code generation register 37.

Similarly, in response to the first pulse of the clock signal at the calculation rate of 61 MHz, the initial value "Z240-255" stored in the second code generation register 45 is input to the selector 49. At the same time, this initial value is converted to the next divided spreading code "Z224-239" in the logic part 47, and is stored in the second code generation register 45.

In the period when the count of the basic received data equals 1, that is, in the period from the phase state 0/16 to the phase state 15/16 of the basic received data "64-79" (as illustrated in FIG. 10), the processing sequence of the calculation phase related to the present symbol A is in the first two cycles, and the processing sequence of the calculation phase related to the preceding symbol Z is in the last 8 cycles.

Specifically, the selector 49 outputs the first 16*2 chips from the beginning of the spreading code related to the symbol A, and outputs the last 16*8 chips of the spreading code related to the symbol Z. Hence, in response to the first pulse, the selector 49 outputs the divided spreading code "A240-255".

Next, in response to the second pulse of the clock signal at the calculation rate of 61 MHz, the divided spreading code "A224-239" stored in the first code generation register 37 is input to the selector 49. At the same time, the divided spreading code "A224-239" is converted to the next divided spreading code "A208-223" in the logic part 39, and is stored in the first code generation register 37.

Similarly, in response to the second pulse of the clock signal at the calculation rate of 61 MHz, the divided spreading code "Z224-239" stored in the second code generation register 45 is input to the selector 49. At the same time, the divided spreading code "Z224-239" is converted to the next divided spreading code "Z208-223" in the logic part 47, and is stored in the second code generation register 45. In this case, the selector 49 outputs the divided spreading code "A224-239".

Next, in response to the third pulse of the clock signal at the calculation rate of 61 MHz, the divided spreading code "A208-223" stored in the first code generation register 37 is input to the selector 49. At the same time, the divided spreading code "A208-223" is converted to the next divided spreading code "A192-239" in the logic part 39, and is stored in the first code generation register 37.

Similarly, in response to the third pulse of the clock signal at the calculation rate of 61 MHz, the divided spreading code "Z208-223" stored in the second code generation register 45 is input to the selector 49. At the same time, the divided spreading code "Z208-223" is converted to the next divided spreading code "Z192-239" in the logic part 47, and is stored in the second code generation register 45. In this case, the selector 49 does not output any divided spreading code.

As illustrated in FIG. 6 and FIG. 7, the above operations are repeated over the subsequent divided spreading codes "A192-207" through "A128-143", and the divided spreading codes "Z192-207" through "Z128-143". That is to say, as illustrated in FIG. 8, even though the divided spreading codes are successively generated in a period of six cycles of the calculation rate of 61 MHz, because of the selective output by the selector 49, these divided spreading codes are not output from the spreading code generator 19.

In addition, in the present embodiment, the object phase range is set to be a section of 160 chips of the received data. Therefore, during the period when the count of the basic received data equals 1, the selector 49 outputs the last 16*8 chips of the spreading codes related to the symbol Z as the divided spreading codes.

Next, in response to the ninth pulse of the clock signal at the calculation rate of 61 MHz, the divided spreading code "A112-127" stored in the first code generation register 37 is input to the selector 49. At the same time, the divided spreading code "A112-127" is converted to the next divided spreading code "A96-111" in the logic part 39, and is stored in the first code generation register 37.

Similarly, in response to the eighth pulse of the clock signal at the calculation rate of 61 MHz, the divided spreading code "Z112-127" stored in the second code generation register 45 is input to the selector 49. At the same time, the divided spreading code "Z112-127" is converted to the next divided spreading code "Z96-111" in the logic part 47, and is stored in the second code generation register 45.

Based on the setting of the object phase range, the selector 49 selects and outputs the divided spreading code "Z112-127". The above operations are repeated over the subsequent divided spreading codes "A96-111" through "A0-15", and the divided spreading codes "Z96-111" through "Z0-15". Hence, the selector 49 then outputs the divided spreading codes "Z96-111" through "Z0-15" related to the symbol Z.

Same as the case in which the count of the basic received data is 0, the spreading code generator 19 further performs the same operation for 15 times up to the state of the phase 15/16. Referring to FIG. 8, in the period when the count of the basic received data equals 1, the divided spreading codes "A240-255" through "A112-127" and "Z112-127" through "Z0-15 are output at the calculation rate of 61 MHz.

As described above, among sixteen cycles of the calculation rate of 61 MHz, six cycles do not contribute to the calculation of the sum of products. The range of the six cycles is shifted by sixteen chips to the right relative to the case in which the count of the basic received data equals 0. This shift occurs once in every sixteen cycles of the data rate of 3.84 MHz. In other words, this shift occurs each time the basic received data is shifted by sixteen bits to the next basic received data.

Therefore, based on variation of the shift, when the count of the basic received data equals 2, the selector 49 successively outputs the first 16*3 chips as the divided spreading codes from the beginning of the spreading codes related to the present symbol A, and successively outputs the last 16*7 chips of the spreading codes related to the preceding symbol Z as the divided spreading codes.

Further, when the count of the basic received data equals 15, the selector 49 successively outputs the first 16*16 chips as the divided spreading codes from the beginning of the spreading codes related to the present symbol A, that is, the spreading code as a whole is successively output as the divided spreading codes, and the selector 49 does not outputs any spreading codes related to the preceding symbol Z.

Next, an explanation is given of an additional feature in operations of the spreading code generator 19.

In the spreading code generator 19, the symbol A transits from a state as a present symbol to a state as a preceding symbol. As described above, in the present embodiment, the object phase range is set to be a section of 160 chips of the received data. As illustrated in FIG. 10 and FIG. 11, for example, the divided spreading code "A240-255" of the symbol A is related to processing sequences of ten types of correlation calculations starting from the basic received data "48-63" through "192-207", respectively, as indicated by the arrow 25-1 through 25-10.

Then, the divided spreading codes "A224-239", "A208-223", ..., "A144-159" of the symbol A, which are related to processing sequences having a calculation phase of 192, become the codes to be first output in one cycle of the data rate of 3.84 MHz.

Referring to FIG. 6, for example, in phase states from 0/16 to 15/16 with the count of the basic received data being 15, the divided spreading code "A144-159" is first output.

In parallel to the processing sequences related to the symbol A, the processing sequences related to the symbol B, which may have calculation phases of 48, 64 or other values, are started. At this moment, the symbol A is no longer the "present symbol", but the "preceding symbol", and this process is referred to as "state transition of the symbol A". Due to this transition, the divided spreading codes related to the symbol A are generated from the code generator 19-2 from then on. In addition, generation of the divided spreading codes related to the symbol Z is stopped when the processing sequences related to the symbol A having a calculation phase of 192 are started.

Referring to FIG. 6, operation of selective output of the divided spreading codes related to the symbol A in 256 phase states is completed, specifically, the 256 phase states include phase states of the basic received data from 0/16 to 15/16 with the count of the basic received data being 0 through 15.

Then, the routine transfers to generation of the divided spreading codes related to the next symbol.

Referring to FIG. 7, the operation of selective output of the divided spreading codes related to the symbol Z in 144 phase states is carried out, specifically, the 144 phase states includes phase states of the basic received data from 0/16 to 15/16 with the count of the basic received data being 0 through 8. Then, in the period related to the following 122 phase states, generation of the next spreading code is stopped.

In the present embodiment, for example, the timing of the above transition is set to be the time when the state of the basic received data "32-47" having the phase 15/16 is terminated. The state of the basic received data "32-47" having the phase 15/16 is indicated in spreading code sections related to the symbol B in FIG. 10 and FIG. 11.

In other words, the timing of the above transition is set to be the time immediately before the processing sequence in which the last sixteen chips "A0-15" of the spreading code related to the present symbol A are output for the second time from the spreading code generator 19 relative to the basic received data.

Referring to FIG. 9, considering the case in which the count of the basic received data becomes 16, which occurs immediately after completion of the operations in the phase state of 15/16 of the basic received data "32-47" related to the symbol B, as illustrated in FIG. 10 and FIG. 11, are completed.

In this case, an initial value "A240-255" stored in the symbol initial value register 33 of the code generator 19-1 shown in FIG. 5 is loaded in the symbol initial value register 41 of the code generator 19-2. At the same time, this initial value is stored in the second code generation register 45 of the code generator 19-2 via the selector 43. In addition, the first sixteen chips "B240-255" of the spreading code related to the present symbol B are loaded in the symbol initial value register 33 of the code generator 19-1. At the same time, this initial value is stored in the first code generation register 37 of the code generator 19-1 via the selector 35.

In response to the first pulse of the clock signal at the calculation rate of 61 MHz, the initial value "B240-255" stored in the first code generation register 37 is input to the selector 49. At the same time, this initial value is converted to the next divided spreading code "B224-239" in the logic part 39, and is stored in the first code generation register 37.

Similarly, in response to the first pulse of the clock signal at the calculation rate of 61 MHz, the initial value "A240-255" stored in the second code generation register 45 is input to the selector 49. At the same time, this initial value is converted to the next divided spreading code "A224-239" in the logic part 47, and stored in the second code generation register 45.

In the period when the count of the basic received data equals 16, that is, in the period from the phase state 0/16 to the phase state 15/16 of the basic received data "48-63" (as illustrated in FIG. 11), the processing sequence for the calculation phase related to the present symbol B is in the first cycle, and the processing sequence for the calculation phase related to the preceding symbol A is in the last 9 cycles.

Specifically, the selector 49 outputs the first sixteen chips from the beginning of the spreading codes related to the symbol B, and outputs the last 16*9 chips of the spreading codes related to the symbol A. Hence, in response to the first pulse, the selector 49 outputs the divided spreading code "B240-255".

The above description is related to the state of the phase 0/16 with the count of the basic received data being 16. The spreading code generator 19 repeats the same operation in the 0/16 phase state for 15 times over phase states up to 15/16.

The subsequent operations are the same as those described for the present symbol A and the preceding symbol Z with reference to FIG. 8.

Specifically, along with increment of the count of the basic received data, the spreading code related to the present symbol B increases in units of sixteen chips, and the spreading code related to the preceding symbol A decreases in units of sixteen chips. As a result, as exemplified in FIG. 9, responding to increase of the count of the basic received data, among the sixteen cycles of the calculation rate of 61 MHz, the section of the six cycles that do not contribute to the sum-of-product calculation is shifted to the right.

In the above, with reference to FIG. 5 through FIG. 11, descriptions are given of the operations of the spreading code generator 19 in accordance with specified timing. In response to the operations, the spreading code storage unit 13 replaces the divided spreading codes, for example, that indicated by the arrow 23 in FIG. 10, sequentially in each clock of the calculation rate of 61 MHz.

As described above, FIG. 10 and FIG. 11 show the relation between the basic received data and the divided spreading code in the 15/16 phase state. For example, the code group, which includes the divided spreading codes, for example, that indicated by the arrow 23, is replaced in each clock of the data rate of 3.84 MHz.

In the present embodiment, the spreading code including 256 chips is divided into sixteen divided spreading codes, and the divided spreading codes are sequentially stored in registers having sixteen taps for correlation calculations. For this reason, in comparison with the matched filter having 256 taps in the related art (refer to FIG. 2), normally sixteen calculation phase processing sequences are generated for the received data having 256 chips. For example, referring to FIG. 10, the divided spreading code "A240-255" is normally associated with processing sequences related to sixteen types of calculation phases.

As described above, however, in the present embodiment, the object phase range, that is, the phase range in which calculations are to be carried out, is set to be a section of 160 chips of the received data totally including 256 chips. For example, in FIG. 10 and FIG. 11, the divided spreading code "A240-255" has an object phase range including 160 chips from the 0/16 phase state (refer to FIG. 4A) of the basic received data "48-63" to the 15/16 phase state of the basic received data "192-207", that is, the divided spreading code "A240-255" is related to processing sequences of ten types of correlation calculations starting from the basic received data "48-63" through "192-207".

Further, in the present embodiment, in order to maintain reliability of the correlation values and reduce the number of operations, the starting timing of the correlation calculations is set to be at the chip phase "48" (refer to FIG. 4A). The object phase range and the starting timing may be changed depending on the purpose.

The matched filter of the present embodiment, for example, for example, is intended to provide a path-searching function. By performing operations, based on the setting of the object phase range, in sections centered at a section expected to contribute to the reliability of the correlation values, it is possible to maintain reliability at substantially the same level with of the correlation calculations in sections of the total 256 chips, and to reduce the number of the divided spreading codes generated in one cycle of the data rate of 3.84 MHz. Consequently, it is possible to reduce the number of the calculation of the sum of products, and further reduce power consumption.

Next, the multiplier 15 multiplies the received data stored in the shift register 11 with the divided spreading codes stored in the spreading code storage unit 13 in one cycle of the calculation rate of 61 MHz. The accumulator 17 sums the sixteen products from the multiplier 15 and outputs a correlation value.

Below, the timing of the calculation of the sum of products is explained with reference to FIG. 12 through FIG. 14.

FIG. 12 shows data diagrams explaining the timing of the calculation of the sum of products in the matched filter according to the present embodiment.

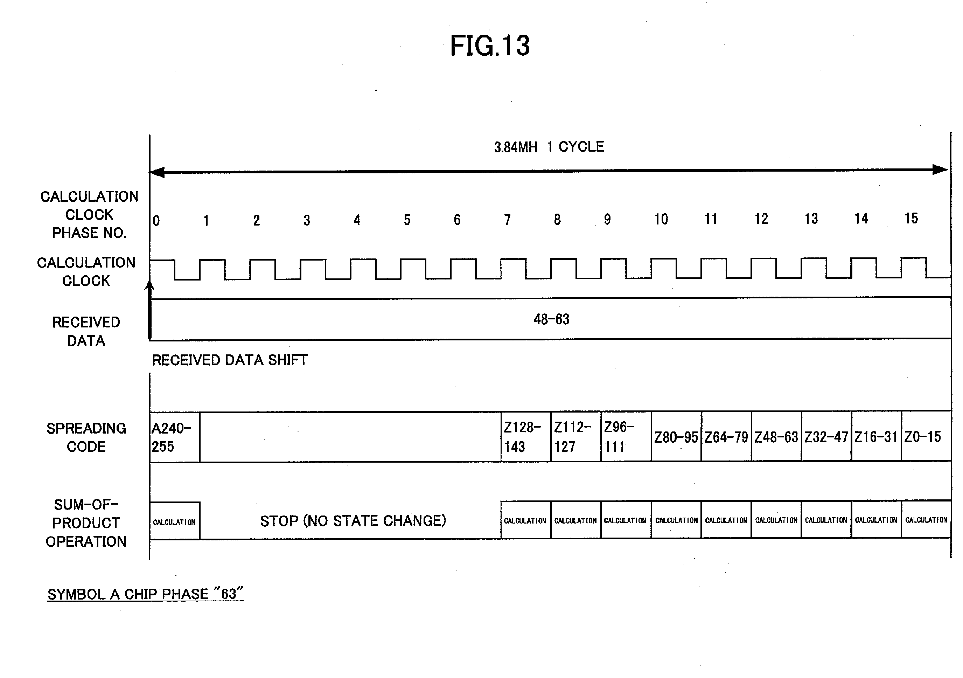

FIG. 13 shows data diagrams, continued from FIG. 12, explaining the timing of the calculation of the sum of products in the matched filter according to the present embodiment.

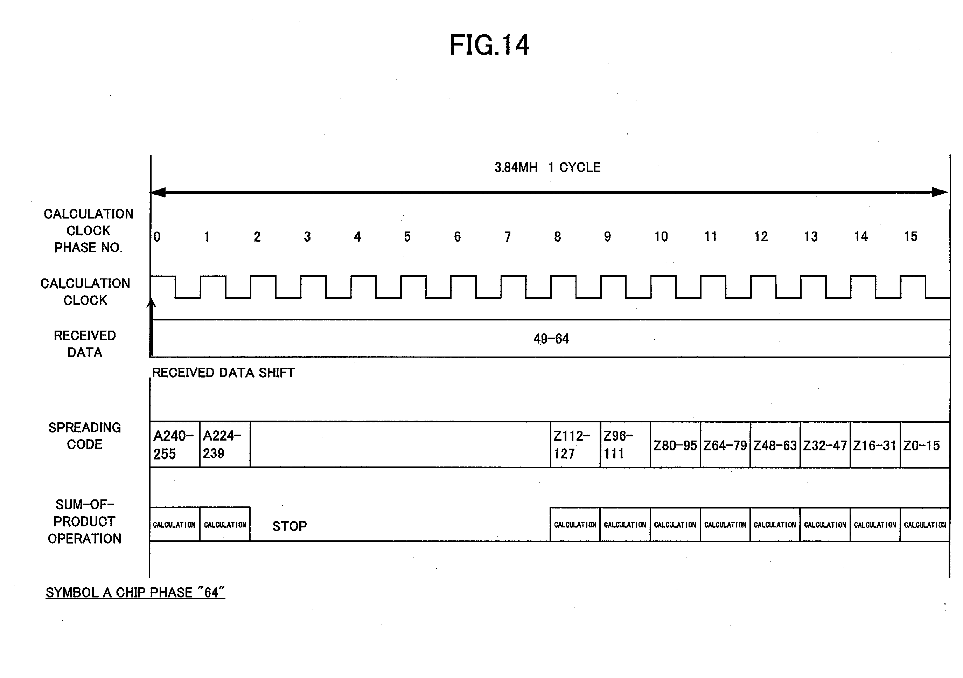

FIG. 14 shows data diagrams, continued from FIG. 13, explaining the timing of calculation of the sum of products in the matched filter according to the present embodiment.

The operations shown in FIG. 12 through FIG. 14 are temporally continued.

The operation in FIG. 12 corresponds to a chip phase "62" of the received data related to the symbol A, and represents a state of the basic received data "48-63" having the phase 14/16 (refer to FIG. 4C).

At the top of FIG. 12, a period equaling one cycle of the data rate (3.84 MHz) of the received data is indicated with a bi-directional arrow.

Below the arrow, a clock waveform of the calculation rate of 61 MHz is presented in FIG. 12, with phase numbers 0 through 15 respectively at the rising edges of the presented clock pulses.

Below the clock waveform, the received data "47-82" stored in the shift register 11 are presented in FIG. 12. In addition, the divided spreading codes stored in the spreading code storage unit 13 and the relevant generation timing are presented in accordance with each cycle of the calculation rate of 61 MHz.

Further, at the bottom of FIG. 12, the calculation of the sum of products in the multiplier 15 and the accumulator 17 are presented.

As described above, in the present embodiment, the object phase range is set to be a section of 160 chips of the received data. Therefore, ten cycles out of sixteen cycles of the calculation rate of 61 MHz are used for holding timing.

Based on the aforesaid generation rules, in response to the first pulse of the clock signal at the calculation rate of 61 MHz, the divided spreading code "A240-255" related to the present symbol A is stored, and in response to the ninth and the subsequent pulses of the clock signal, the divided spreading code "Z128-143" through "Z0-15" related to the preceding symbol A are sequentially stored.

The calculation of the sum of products in the multiplier 15 and the accumulator 17, as illustrated at the bottom of FIG. 12, are executed essentially in synchronization with the operations of the spreading code storage unit 13, and hence, in one cycle of the data rate of 3.84 MHz, the calculation of the sum of products are executed for totally ten times for the divided spreading codes "A240-255" and "Z128-143" through "Z0-15".

The operation in FIG. 13 corresponds to a chip phase "63" of the received data related to the symbol A, and represents a state of the basic received data "48-63" having the phase 15/16 (refer to FIG. 4D).

In FIG. 13, the state of the received data "48-63" stored in the spreading code storage unit 13 is different from that in FIG. 12; except for this, the divided spreading codes stored in the spreading code storage unit 13, the relevant generation timing, furthermore, the timing of the calculation of the sum of products, are the as those in FIG. 12.

The operation in FIG. 14 corresponds to a chip phase "64" of the received data related to the symbol A, and represents a state of the basic received data "64-79" having the phase 0/16. Therefore, the divided spreading codes generated in FIG. 14 are different from those generated in FIG. 12 and FIG. 13. In this case, referring to FIG. 10, in addition to the processing sequence of the calculation phase "48", the processing sequence of the calculation phase "64" is executed in parallel.

Therefore, in response to the first and second pulses of the clock signal at the calculation rate of 61 MHz, the divided spreading codes "A240-255" and "A224-239" related to the present symbol A are stored sequentially. Next, and in response to the ninth and the subsequent pulses of the clock signal, the divided spreading code "Z112-127" through "20-15" related to the symbol Z are sequentially stored.

Next, the calculation of the sum of products in the multiplier 15 and the accumulator 17, as illustrated at the bottom of FIG. 12, are executed essentially in synchronization with the operations of the spreading code storage unit 13, and hence, in one cycle of the data rate of 3.84 MHz, the calculation of the sum of products are executed for totally ten times over the divided spreading codes "A240-255" through "A224-239", and "Z112-127" through "Z0-15"

FIG. 15 shows data diagrams illustrating the address allocation in the RAM of the accumulation and storage unit 21.

FIG. 16 shows data diagrams, continued from FIG. 15, illustrating the address allocation in the RAM of the accumulation and storage unit 21.

FIG. 15 and FIG. 16 correspond to FIG. 10 and FIG. 11, respectively, and data diagrams in FIG. 16 are temporally continued from those in FIG. 15 at points a, b, c, and d.

Comparing FIG. 15 with FIG. 10, and FIG. 16 with FIG. 11, it is clear that the same address number is assigned to the correlation values obtained by the processing sequences of the same calculation phase. For example, the same address "0" (refer to FIG. 15) is assigned to the correlation values obtained by the processing sequences of the same calculation phase "48", as indicated by the arrow 25-1 in FIG. 10.

Further, the same address "16" is assigned to the correlation values obtained by the processing sequences of the same calculation phase "64", as indicated by the arrow 25-2 in FIG. 10. Similarly, the same address "144" is assigned to the correlation values obtained by the processing sequences of the same calculation phase "192", as indicated by the arrow 25-10 in FIG. 10. In other words, addresses are assigned to the calculation phases at intervals of 16.

The operations in FIG. 15 and FIG. 16 correspond to a state of the basic received data having a phase of 15/16 (refer to FIG. 4C). Hence, addresses are also respectively assigned to states of the basic received data having phases from 0/16 to 14/16.

Although not illustrated in FIG. 15 and FIG. 16, for example, an address number of 15 is assigned to the correlation value between the divided spreading code "A240-255" and the received data "33-48", which correspond to the state of the basic received data "48-63" having the phase 0/16 (refer to FIG. 4A) related to the symbol A. In addition, an address number of 14 is assigned to the correlation value between the divided spreading code "A240-255" and the received data "34-49" (refer to FIG. 4B), and an address number of 1 is assigned to the correlation value between the divided spreading code "A240-255" and the received data "47-62" (refer to FIG. 4C).

In this way, addresses are assigned at intervals of sixteen to the processing sequences of the calculation phases at which the basic received data start. Addresses between these starting addresses are assigned to the processing sequences of the calculation phases corresponding to the state of the basic received data having the phases from 0/16 to 14/16. Therefore, in the operations of reading the RAM 21-5 of the accumulation and storage unit 21, and the accumulation operation in the accumulators 21-1 and 21-2, the correlation values obtained by the processing sequences of the same calculation phase are read out and accumulated sequentially.

As described above, the divided spreading codes are generated in accordance with specified generation rules. By utilizing these rules, it is possible to know the timing of the accumulation. For example, referring to FIG. 10 and FIG. 11, in the processing sequence of the calculation phase "48" related to the symbol A as indicated by the arrow 25-1, the correlation value between the divided spreading code "A240-255" and the basic received data "48-63" is initially stored at the address "0" (refer to FIG. 15).

The timing of reading out and accumulating the initially stored Correlation value from the RAM 21-5 is substantially at the timing of the second clock pulse of the calculation rate of 61 MHz and after elapse of sixteen cycles of the data rate of 3.84 MHz, that is, the timing of obtaining the correlation value between the divided spreading code "A224-239" and the basic received data "64-79". The timing of reading out and accumulation of the accumulated correlation value from the RAM 21-5 is substantially at the timing of the third clock pulse of the calculation rate of 61 MHz and after elapse of sixteen cycles of the data rate of 3.84 MHz,

Below, a description is given of examples of the accumulation operation in one cycle of the data rate of the received data at 3.84 MHz. Specifically, accumulation in the state of the 15/16 phase of the basic received data "48-63", as indicated by the arrow 23, is described with reference to FIG. 10.

First, the basic received data "48-63" (refer to FIG. 4D) in the phase state of 15/16 and the divided spreading code "A240-255" are multiplied and the products are summed (this corresponds to the processing of the calculation phase of 48 related to the symbol A), and the calculation result is stored at address "0".

Next, the basic received data "48-63" and the divided spreading code "Z128-143" are multiplied and the products are summed (this corresponds to the processing of the calculation phase of 192 related to the symbol Z), and the calculation result is accumulated on a correlation value already stored at address "144", and the accumulation result is stored at address "144". The stored value at the address "144" is read out from the RAM 21-5 in response to the second clock pulse of the calculation rate of 61 MHz after sixteen cycles of the data rate of 3.84 MHz elapse from the time of the accumulation.

Finally, the basic received data "48-63" and the divided spreading code "Z0-15" are multiplied and the products are summed (this corresponds to the processing of the calculation phase of 64 related to the symbol Z), and the calculation result is accumulated on a correlation value already stored at address "16", and the accumulation result is stored at address "16". The stored value at the address "16" is read out from the RAM 21-5 in response to the 10th clock pulse of the calculation rate of 61 MHz after sixteen cycles of the data rate of 3.84 MHz elapse from the time of the accumulation.

The above accumulation operation is executed in one cycle of the data rate of the received data at 3.84 MHz.

Next, in the state of the basic received data "64-79" of the phase 0/16, a code group formed from divided spreading codes is updated, and the same sum-of-product calculation corresponding to the results of the sum-of-product calculation are carried out.

In the present embodiment, the object phase range is set to be a section of 160 chips of the received data. Due to this setting, it is possible to reduce the word number of the RAM 21-5 by 160 words.

Summarizing the present invention, the matched filer of the present invention includes the shift register 11, the spreading code storage unit 13, the multiplier 15, the accumulator 17, the spreading code generator 19, and the accumulation and storage unit 21.

The shift register 11 has a number of sixteen taps, which is equal to the square root of the spreading factor 256. The shift register 11 holds and shifts the received data in units of bits (refer to FIGs. 4A through 4D).

The spreading code generator 19 generates the spreading codes divided by the number of taps at the calculation rate that is roughly sixteen times higher than the data rate of the received data of 3.84 MHz (refer to FIG. 8).

The spreading code storage unit 13 stores the divided spreading codes generated in the spreading code generator 19 in order at the calculation rate (refer to FIG. 10 and FIG. 11).

The multiplier 15 multiplies the received data stored in the shift register 11 with the divided spreading codes stored in the spreading code storage unit 13 at the calculation rate. The accumulator 17 sums the products from the multiplier 15 at the calculation rate (refer to FIG. 12).

The accumulation and storage unit 21 accumulates correlation values related to processing sequences of the same calculation phase, and stores the accumulation result (refer to FIG. 15 and FIG. 16).

The spreading code generator 19 has two code generators 19-1, 19-2. The code generator 19-1 generates spreading codes corresponding to a first symbol as divided spreading codes successively, and the code generator 19-2 generates spreading codes corresponding to a second symbol as divided spreading codes successively. The spreading code generator 19 further has the selector 49 that selects and outputs the divided spreading codes based on the phase of the calculation of the sum of products (refer to FIG. 5).

While the invention is described above with reference to specific embodiments chosen for purpose of illustration, it should be apparent that the invention is not limited to these embodiments, but numerous modifications could be made thereto by those skilled in the art without departing from the basic concept and scope of the invention.

For example, in the above embodiments, the spreading factor is 256, the matched filer includes the shift register 11 having a number of taps equal to the square root of the spreading factor and the spreading code storage unit 13. But the present invention is not limited to this configuration, for example, the matched filer may include a shift register having a number of taps equal to a divisor of the spreading factor and the spreading code storage unit 13.

In the above embodiments, use is made of a calculation rate that is roughly sixteen times higher than the data rate of the received data. Generally, if the spreading factor is denoted to be L (chip number), a divisor of the spreading factor is denoted to be M (tap number), and the multiple of the calculation rate in use is denoted to be N, the expression L=M*N substantially holds.

However, by setting the object phase range, that is, the phase range in which calculations are to be carried out, for the purpose of further reducing the circuit size and power consumption, the constraint applied by the above expression can be moderated. For this reason, in the present invention, it is possible to use a calculation rate higher than the data rate of the received data.

In the above embodiments, in order to further reduce the number of correlation calculations, the object phase range is set. The present invention is not limited to this, and it can be realized even without this setting. In this case, the number of the processing sequences of the calculation phases shown in FIG. 10 and FIG. 11 is 16.

In the above embodiments, in order to reduce the number of correlation calculations, in one cycle of the data rate of the received data at 3.84 MHz, and in a period of six cycles of the calculation rate of 61 MHz, divided spreading codes are not output from the spreading code generator 19. The present invention is not limited to this. For example, the six cycles can be re-grouped as desired. In both cases, it is preferable that the accumulation operation, which makes use of regularity of address allocation and the accumulation operation, be carried out in the accumulation and storage unit 21.

In the above embodiments, in order to make the series of operations involved in the present invention clear, the spreading code generator 19 is described as a component of the matched filter of the present invention. But the present invention is not limited to this configuration. For example, the spreading code storage unit 13 of the matched filter of the present invention may be configured to store the divided spreading codes sequentially based on the calculation phase. Hence, the spreading code generator 19 may be separately realized to be an independent element.

In the above embodiments, the descriptions are made by focusing on configurations of the matched filer. The matched filter of the present invention, or the spreading code generator 19, which can be separately achieved, may be realized to provide the cell-searching function or the path-searching function. Hence, the matched filter of the present invention, or the spreading code generator 19, may be provided in mobile communication terminals such as cellular phones and PDA (Personal Digital Assistants).

In the above embodiments, the descriptions are made of the correlation calculations assuming data are received from one base station. But the present invention is not limited to this case. The present application is applicable to correlation calculations even when receiving data from a plurality of base stations.

For example, a matched filter system used for two base stations can be realized by using an operation rate two times the above-mentioned operation rate of 61 MHz, that is, 122 MHz.

In this case, referring to FIG. 12, in one cycle of the data rate of the received data at 3.84 MHz, 32 clock pulses are generated. Hence, for example, the first sixteen cycles may be used by the first base station, and the second sixteen cycles may be used by the second base station. In this way,

It is possible to realize a matched filter system able to be used by two base stations by just changing the operation rate.

In the above embodiments, it is described that sampling is performed once in each chip of the received data. But the present invention is not limited to this case. The sampling may be performed twice or more in each chip of the received data. For example, in the case of m-fold over sampling, a number of m matched filters of the present invention may be arranged in parallel to execute correlation calculations at timings of bit-shifting the received data in each chip of the received data.

In the above embodiments, the present invention is realized by using hardware so as to prioritize high speed operations. But the present invention is not limited to this configuration. For example, a portion of the present invention, or a portion of the spreading code generator 19 may be realized by software.

According to the present invention, it is possible to provide a matched filter able to reduce a size of a circuit.

This patent application is based on Japanese Priority Patent Application No. 2004-120726 filed on April 15, 2004, the entire contents of which are hereby incorporated by reference.

## Claims

1. A matched filter device, comprising:
a data shift unit that shifts a received data in units of bits at a data rate of the received data, said data shift unit having a number of taps equaling a divisor of a spreading factor;
a code storage unit that stores divided spreading codes sequentially at a calculation rate higher than the data rate, said divided spreading codes being obtained by dividing a spreading code by the number of the taps; and
a calculation unit that calculates products of the received data stored in the data shift unit and the divided spreading codes stored in the code storage unit, and sums the products.

2. The matched filter device as claimed in claim 1, wherein the code storage unit stores the divided spreading codes sequentially based on a phase of the calculation of the sum of the products.

3. The matched filter device as claimed in claim 1, further comprising a code generation unit that generates the divided spreading codes at a calculation rate determined by the spreading factor and the divisor.

4. The matched filter device as claimed in claim 1, further comprising a code generation unit that successively and simultaneously generates spreading codes corresponding to different symbols as the divided spreading codes in one cycle of the data rate.

5. The matched filter device as claimed in claim 4, wherein the code generation unit includes a first code generator that successively generates spreading codes corresponding to a first symbol as the divided spreading codes in one cycle of the data rate, and a second code generator that successively generates spreading codes corresponding to a second symbol as the divided spreading codes in one cycle of the data rate.

6. The matched filter device as claimed in claim 3, wherein the code generation unit further includes a selection outputting unit that selectively outputs the divided spreading codes based on a phase of the calculation of the sum of the products.

7. The matched filter device as claimed in claim 1, wherein the calculation unit performs a plurality of number of times of the calculations in one cycle of the data rate.

8. The matched filter device as claimed in claim 1, further comprising an accumulation storage unit that accumulates correlation values corresponding to processing sequences having the same phase of the calculation.

9. The matched filter device as claimed in claim 1, wherein
the data shift unit has a number of taps corresponding to a square root of the spreading factor; and
the code storage unit stores the divided spreading codes sequentially.

10. The matched filter device as claimed in claim 1, wherein
the data shift unit shifts the received data received from a plurality of base stations;
the code storage unit and the calculation unit operate at a calculation rate corresponding to a number of the base stations.

11. A mobile communication terminal, comprising a matched filter device, wherein said matched filter device including:
a data shift unit that has a number of taps equaling a divisor of a spreading factor and shifts a received data in units of bits at a data rate of the received data;
a code storage unit that stores divided spreading codes sequentially at a calculation rate higher than the data rate, said divided spreading codes being obtained by dividing a spreading code by the number of the taps; and
a calculation unit that calculates products of the received data stored in the data shift unit and the divided spreading codes stored in the code storage unit, and sums the products.

12. A spreading code generation device, comprising:
a code generation unit that successively and simultaneously generates spreading codes corresponding to different symbols as divided spreading codes in one cycle of a data rate; and
a selection outputting unit that selectively outputs the divided spreading codes.

13. The spreading code generation device as claimed in claim 12, wherein the code generation unit successively and simultaneously generates the spreading codes divided by a divisor of a spreading factor as the divided spreading codes.

14. The spreading code generation device as claimed in claim 12, wherein the selection outputting unit selectively outputs the divided spreading codes based on a phase of a calculation of a sum of products of received data and the divided spreading codes.

15. A mobile communication terminal, comprising a spreading code generation device, wherein said spreading code generation device including:
a code generation unit that successively and simultaneously generates spreading codes corresponding to different symbols as divided spreading codes in one cycle of a data rate; and
a selection outputting unit that selectively outputs the divided spreading codes.
